(19) Europäisches Patentamt
European Patent Office
Office européen des brevets

(11) **EP 4 644 870 A1**

(12) **EUROPEAN PATENT APPLICATION**

(43) Date of publication:
**05.11.2025 Bulletin 2025/45**

(21) Application number: **24174180.0**

(22) Date of filing: **03.05.2024**

(51) International Patent Classification (IPC):
***G01N 21/41*** *(2006.01)*

(52) Cooperative Patent Classification (CPC):
**G01N 21/4133;** G01N 2021/458

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Munster Technological University
Bishopstown T12 P928 Cork (IE)**

(72) Inventor: **The designation of the inventor has not
yet been filed**

(74) Representative: **Purdylucey Intellectual Property
23 Ely Place
Dublin 2 D02 N285 (IE)**

(54) **REFRACTIVE INDEX SENSOR**

(57) Disclosed is a refractive index sensor that includes a reference laser and a RI sensitive laser wherein the reference and RI sensitive lasers have reference and sensing oscillating frequencies respectively. The reference laser is configured to maintain the oscillating frequency at a constant value, upon exposure of the refractive index senor to an input sample, and the RI sensitive laser has the sensing oscillating frequency that varies based on a refractive index of the input sample, upon exposure to the input sample. The reference laser and RI sensitive lasers generate reference and sensing signals, and a photodiode receives and combines the reference and sensing signals to generate a combined signal that has a beat frequency proportional to the refractive index of the input sample. A computing unit determines the refractive index of the input sample based on the beat frequency.

Figure 1 Illustration of the origin of detection limit, which is proportional to the Full Width Half Maximum (FWHM) of the spectral feature

FIG.1

**Description**

**Field**

The present disclosure relates to a refractive index sensor, and more specifically to a heterodyne refractive index sensor using hybrid external cavity semiconductor lasers.

**Background**

Refractometers are used in a wide range of industries. Refractometers play a role in routine sample analysis of fresh produce, dietary food and beverage products, alcoholic beverages, and sugar concentrates. There is a growing demand for refractometers in healthcare. For example, monitoring individual protein levels of serum and plasma is emerging as a prominent application. Water quality testing is currently carried out offline involving the collection of samples that are sent away for analysis and often takes 2-3 days to complete, delaying the identification and resolution of faults. Further, air quality analysis is an important market, and many high-performance sensors use quantum cascade laser (QCL) based systems- a highly specialised laser with a high unit cost. Refractive index sensors are also key components in many types of photo-thermal spectroscopy system.

The monitoring a substance's refractive index is a powerful method of optical sensing as many contaminants and processes affect the refractive index. Monitoring the RI index of a substance can also provide information on its temperature, pressure and other physical parameters which can be of critical importance in environmental monitoring or in processes in chemical/manufacturing plants. The response of an optical resonator is linked to the refractive index of the materials of which it is composed. In an example, there is a technology based on silicon ring resonators, which detects the small change in resonant wavelength that is induced when material is deposited on the ring. The surface of the ring is functionalised with a range of antigens that are specific to different target compounds. When patient samples are run over the chip, the macromolecules bond to the surface changing the resonance wavelength. Further, Mach Zehnder interferometer based refractive index (RI) measurements are used to monitor the dynamics of water quality in drinking water distribution networks. The RI is a generic indicator of water quality as any substance that is dissolved in water will change the water's refractive index. Thus, monitoring the RI allows all chemical changes to be tracked regardless of the type, unlike other sensors, each of which are sensitive to only a small subset of possible contaminants. The RI sensing can therefore provide event monitoring giving early warning of problems in the network.

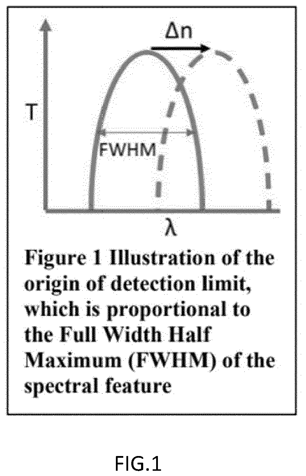

The detection limit (DL) is the key measure of the performance of a RI sensor and determines the smallest change in refractive index that a sensor can detect. The DL is a function of the RI sensitivity, which is the magnitude in shift of the resonant wavelength versus the change in RI of the sample, and of the sensor resolution, which characterizes the smallest possible spectral shift that can be accurately measured. FIG.1 illustrates the origin of the detection limit, which is proportional to the Full width Half maximum (FWHM) of the spectral feature. The sensitivity depends on the fraction of the optical mode that interacts with the sample. The sensor resolution depends on precision with which an extrema in the transmission spectrum can be tracked, which will be proportional to Q-factor of the resonator. The detection limit is commonly defined as DL=R/S, where R is the sensor resolution i.e. the minimum spectral shift that can be resolved and S is the is the sensitivity, the shift in resonance wavelength with change in refractive index. The resolution R is determined the standard deviation of the spectral variations, which is proportional to the FWHM of the resonance and inversely proportional to signal to noise ratio [I. M. White and X. Fan, "On the performance quantification of resonant refractive index sensors," Optics Express 16(2), 1020-1028 (2008).]. R is a function of the entire system performance though for simplicity and to allow the use of the detection limit as a figure of merit, R is often taken to be the FWHM. Based on this criteria, typical values for the detection limit are on the order of $1 \times 10^{-6}$ Refractive index unit (RIU) for silicon micro-ring based sensors, which corresponds to concentrations in the parts per million (ppm) range. While these are powerful techniques, parts per billion sensitivities are required to detect many trace substances and contaminants.

**Summary**

In an aspect of the present invention, there is provided a laser, the emission wavelength of which depends on the refractive index of the surrounding material, and a means to detect very small changes in the emission wavelength of the said laser, by mixing the output of the refractive index sensing laser with that of a reference laser. The mixing of the two outputs produces a beat frequency, with a value that is given by the difference between the two frequencies, which is monitored by a suitable photodiode (also known as heterodyne detection in the literature). A change in the cladding material changes the frequency of the RI sensitive laser creating a change in the beat frequency.

According to the invention there is provided, as set out in the appended claims, there is provided a refractive index sensor that includes a reference laser and a RI sensitive laser wherein the reference and RI sensitive lasers have reference and sensing oscillating frequencies respectively, wherein the reference laser is configured to maintain the oscillating frequency at a constant value, upon exposure of the refractive index senor to an input sample, wherein the RI sensitive laser has the sensing oscillating frequency that varies based on a refractive index of the input sample, upon exposure to the input sample, wherein the reference laser and RI sensitive lasers generate reference and sensing signals. The refractive index sensor further includes a photodiode for receiving and combining the reference and sensing signals to generate a combined signal that has a beat frequency proportional to the refractive index of the input sample, and a computing unit for determining the refractive index of the input sample based on the beat frequency.

In an embodiment of the present invention, the RI sensitive laser includes a hybrid external cavity laser formed of a gain chip with a refractive index sensitive element that controls the operating wavelength of the RI sensitive laser.

In an embodiment of the present invention, the RI sensitive laser includes a hybrid external cavity laser formed of a one-dimensional photonic cavity and a gain chip, wherein the one-dimensional photonic cavity acts as a resonant mirror that sets the operating wavelength of the RI sensitive laser.

In an embodiment of the present invention, the reference laser includes a hybrid external cavity laser formed of a gain chip with a refractive index sensitive element that controls the operating wavelength of the RI sensitive laser, and in that the refractive index sensitive element has a thick silicon oxide cladding to ensure no changes to the reference oscillating frequency upon exposure to the input sample.

In an embodiment of the present invention, each of the RI sensitive and reference lasers have linewidth of order of MHz or less.

In an embodiment of the present invention, the one-dimensional photonic crystal cavity is silicon-nitride based.

In an embodiment of the present invention, each of the RI sensitive and reference lasers has lasing wavelengths, such that the difference in respective frequencies is less than the bandwidth of the photodiode.

In an embodiment of the present invention, the RI sensor is situated within a gas cell.

In an embodiment of the present invention, the photodiode is integrated either monolithically, using heterogeneous integration, hybrid integration or using flip chip bonding on the chip.

In an embodiment of the present invention, the RI sensitive laser has the sensing oscillating frequency that varies based on a refractive index change generated by temperature, through thermo-optic mechanism, so that the RI sensor may be used for sensitive temperature measurements

In an embodiment of the present invention, each of the RI sensitive and reference lasers are configured to be exposed to similar fluctuations in conditions external to the refractive index sensor.

In an embodiment of the present invention, the RI sensitive laser includes a Distributed Feedback (DFB) laser, including phase-stabilized and self-injection-locked DFB and Fabry-Perot (FP) lasers.

In an embodiment of the present invention, each of the RI sensitive and reference lasers have arbitrarily narrow linewidths down to the 1 Hz.

In an embodiment of the present invention, the RI sensitive laser has the sensing oscillating frequency that varies based on at least one of: a refractive index change generated by temperature through thermo-optic mechanism, a refractive index change generated by pressure of the fluid interacting with the RI sensitive laser, a refractive index change generated by humidity of the fluid interacting with the RI sensitive laser, and a refractive index change generated by concentration of the fluid interacting with the RI sensitive laser.

In another aspect of the present invention, there is provided a method of estimating a refractive index of an input sample. The method includes providing a reference laser and a RI sensitive laser; generating a reference signal by the reference laser upon exposure of the reference laser to the input sample, wherein the reference signal has a constant reference frequency; generating a sensing signal by the RI sensitive laser upon exposure of the RI sensitive laser to the input sample, wherein the sensing signal has a sensing oscillating frequency that varies based on a refractive index of the input sample; combining the reference and sensing signals by a photodiode, to generate a combined signal that has a beat frequency proportional to the refractive index of the input sample; and estimating the refractive index of the input sample based on the beat frequency.

Various embodiments of the present invention provide a refractive index (RI) sensor that has a refractive index detection limit improved by 3 orders of magnitude relative to the state of the art. In one embodiment, the RI sensor implements an optical heterodyne measurement set-up to monitor a hybrid external cavity semiconductor laser. The hybrid external cavity laser uses a resonant mirror comprised of a one-dimensional (1D) photonic crystal cavity (PhC), a waveguide and a gain chip (also known as a reflective semiconductor optical amplifier). A significant portion mode supported by the 1D PhC overlaps with the upper cladding material (in this case, the gas or liquid of the sample), which means that the lasing wavelength is strongly affected by the sample's refractive index. The linewidth of the laser is of the order of megahertz which is at least three orders of magnitude smaller than that of silicon ring resonators typically used for RI sensing. The output of this laser is combined with that of a reference laser to create a beat signal to read out the changes in lasing wavelength caused by changes in the ambient RI. Lasers with linewidths in kilohertz range and smaller have been demonstrated and thus very low detection limits are possible. The beat frequency depends on the difference in wavelength between the two lasers and will typically be in 0.1-50GHz range. The beat frequency is monitored using a photodiode with a suitable frequency response.

In a preferred embodiment, the RI sensing laser, the reference laser and the photo-diode are realised on a silicon chip and connected using waveguides using photonic integration techniques, that may include micro-transfer printing. Other Integration techniques may be employed such as monolithic or heterogeneous or hybrid integration approaches (Template Assisted Selective Epitaxy, re-growth) or using die-bonding, wafer-bonding and flip-chip bonding on the chip.

The waveguides may be comprised of silicon or silicon nitride amongst others.

It should be clear to some knowledgeable in the art, that heterodyne measurement can be applied to any laser type the wavelength of which is sensitive to the cladding material.

## Brief Description of the Drawings

The invention will be more clearly understood from the following description of an embodiment thereof, given by way of example only, with reference to the accompanying drawings, in which:

FIG. 1 illustrates an origin of the detection limit, which is proportional to the Full width Half maximum (FWHM) of the spectral feature of an optical device;

FIG.2 is a block diagram illustration of an RI sensor, in accordance with an embodiment of the present invention;

FIG.3 is a three-dimensional view of a one-dimensional photonic cavity laser for use in the RI sensor of FIG.2, in accordance with an embodiment of the present invention;

FIG.4 illustrates a refractive index sensor formed using a pair of photonic cavity lasers, based on an on-chip optical heterodyne measurement technique, in accordance with an embodiment of the present invention; and

FIG. 5 provides an example measurement showing the refractive index of an input sample proportional to the beat frequency.

## Detailed Description of the Drawings

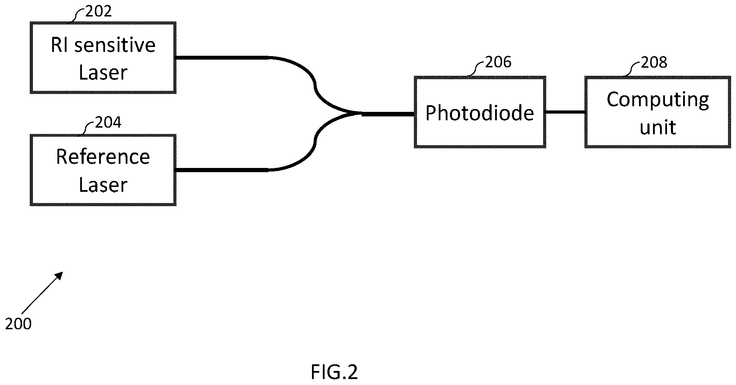

FIG.2 illustrates a refractive index sensor 200 based on an optical heterodyne measurement technique, in accordance with an embodiment of the present invention.

The refractive index sensor 200 includes an RI sensitive laser 202, a reference laser 204, and a photodiode 206. A computing unit 208 may be provided external to the refractive index sensor 200 or integrated within it. The RI sensitive laser 202 and reference laser 204 have reference and sensing oscillating frequencies respectively. The reference laser 204 is constructed so that it experiences no changes to the reference oscillating frequency upon exposure to the input sample. Examples of the input sample include gases that flow across sensor chip, for example methane in standard air, pesticides in water etc. The sample may be introduced via a variety of methods, that include pumping the sample gas or fluid through a flow cell that contains the RI sensor 200, or by pumping the sample through channels or pipes that are attached to the RI sensors or in which the RI sensor 200 is embedded.

The RI sensitive laser 202 has the sensing oscillating frequency that changes based on a refractive index of the input sample, wherein the reference laser 204 and RI sensitive laser 202 generate reference and sensing signals respectively. In an embodiment of the present invention, the RI sensitive laser 202 has the sensing oscillating frequency that varies based on at least one of: a refractive index change generated by temperature through thermo-optic mechanism, a refractive index change generated by pressure of the fluid interacting with the RI sensitive laser, a refractive index change generated by humidity of the fluid interacting with the RI sensitive laser, and a refractive index change generated by concentration of the fluid interacting with the RI sensitive laser. Further, each of the RI sensitive and reference lasers are constructed so that they are exposed to same fluctuations in the conditions external to the refractive index sensor.

In an embodiment of the present invention, each of the RI sensitive and reference lasers have arbitrarily narrow linewidths down to the 1 Hz, such as the one exhibited by self-injection locked DFB lasers and phase-controlled spiral lasers.

In an embodiment of the present invention, one or both reference and RI sensitive lasers may be integrated either monolithically or using heterogeneous or hybrid integration approaches. Examples of such approaches include, but are not limited to, ($\mu$Transfer-Printing, Template Assisted Selective Epitaxy, re-growth) or using die-bonding, wafer-bonding and flip-chip bonding on the chip.

The photodiode 206 receives and combines the reference and sensing signals to generate a combined signal that has a beat frequency proportional to the refractive index of the input sample. The computing unit 208 determines the refractive index of the input sample based on the beat frequency.

In an embodiment of the present invention, each of the RI sensitive laser 202 and the reference laser 204 have nominally identical lasing wavelengths, which mean the difference of their frequencies should be less than the bandwidth of the photodiode 206. In an example, if the bandwidth of the photodiode is 35GHz, the wavelengths of both lasers should differ by a fraction of this e.g. 30GHz.

Examples of the RI sensitive laser 202 include but are not limited to: a Distributed Feedback (DFB) laser, including phase-stabilized and self-injection-locked DFB and FP lasers.

Further, the RI sensitive laser 202 may include a hybrid external cavity laser formed of a gain chip and a) a Distributed Bragg Grating (DBR), $\pi$-shifted DBR or sampled DBR, b) a racetrack or a microring resonator (MRRs), or a series of MRRs and racetrack resonators, included configurations such as Sagnac loops, Vernier loops and add/drop routing, c) an injection-locked Fabry-Perot (FP) cavity, d) a grating integrated MRR or racetrack resonator and e) a combination of a MRR or racetrack resonator and a grating (such as a DBR), wherein a), b), c), d) and e) act as a resonant mirror that sets the operating wavelength of the RI sensitive laser 202.

Also, both the RI sensitive laser 202 and the reference laser 204 may use a hybrid external cavity laser which is described in detail below.

Hybrid External cavity lasers offer advantages over other types of semiconductor laser, as the monolithic distributed feedback lasers, as the hybrid nature enables independent optimization and fabrication of the active and passive regions while allowing cost-effective use of III-V gain materials. This alleviates problems commonly encountered in wafer-bonded or heterogeneously integrated lasers, which arise from the difficulties in simultaneously realizing evanescent coupling, good thermal conductivity, and high gain. Further to that, both the silicon and the gain chips can be tested and screened prior to assembly to improve yields. Photonic crystals (PhC) lasers are another variant of hybrid external cavity lasers.

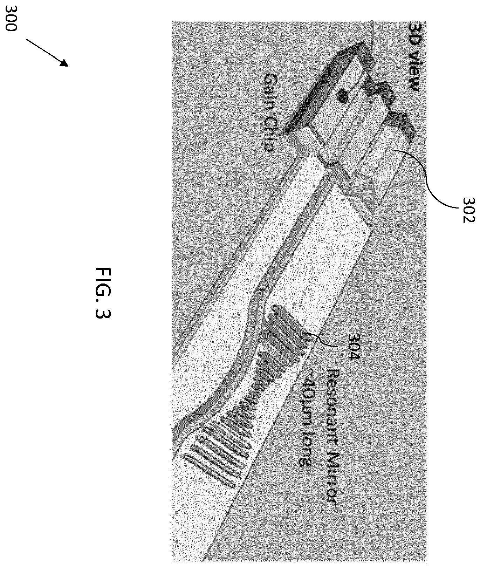

FIG.3 is a three-dimensional view of a typical hybrid external cavity laser 300 that may be used in an embodiment of the RI sensor 200, in accordance with an embodiment of the present invention. An example of the hybrid external cavity laser 300 is a PhC laser. The hybrid external cavity laser 300 includes a III-V reflective semiconductor amplifier also known as a gain chip 302 and a silicon nitride based one-dimensional photonic crystal (PhC) 304 which acts as a resonant mirror that sets the operating wavelength. The hybrid external cavity laser 300 achieves side mode suppression ratio greater than 40 dB, with threshold currents<20 mA and wall plug efficiencies of almost 10%. It is to be noted that approximately 40% of the mode supported by the 1D PhC 304 exists in the top cladding material (in this case, the air or water of the sample) meaning the lasing wavelength is affected by the sample's refractive index giving a sensitivity of approx. 140nm/RIU. The linewidth of the hybrid external cavity laser 300 is narrow, approximately $4\times10^6$MHz, which is about 3 orders of magnitude narrower than the silicon-based ring resonators in use, enabling extremely precise RI measurements.

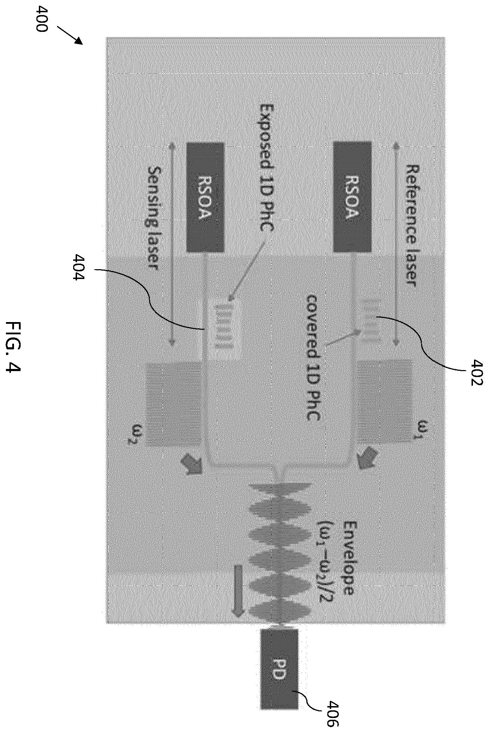

FIG.4 illustrates a refractive index sensor 400 based on an on-chip optical heterodyne measurement technique, in accordance with another embodiment of the present invention.

The refractive index sensor 400 includes first and second hybrid external cavity lasers 402 and 404 fabricated on a silicon chip, wherein each hybrid external cavity is similar to the hybrid external cavity 300. An example of hybrid external cavity laser is a PhC laser. Further, each of the first and second PhC lasers 402 and 404 have nominally identical lasing wavelengths, with frequency difference less than the bandwidth of the employed photodiode 406. In an embodiment of the present invention, the photo-diode (PD) 406 is integrated either monolithically (via a silicon germanium photodiode) or using flip chip bonding of a III-V diode. The photo-diode (PD) 406 may be integrated either monolithically (via a silicon germanium photodiode) or using flip chip bonding of a III-V diode. The gain chip (Reflective Semiconductor Optical Amplifiers) may be flip chip bonded to the chip.

The first hybrid external cavity laser 402 acts as a local oscillator with first oscillating frequency $f_1$ and has a thick silicon dioxide cladding. The first hybrid external cavity laser 402 has a thick silicon dioxide cladding over its resonant mirror which makes it insensitive to the refractive index of an input sample. The second hybrid external cavity laser 404 does not have a silicon dioxide cladding over its resonant mirror and thus interacts with the input sample. The input sample may be brought into contact with the silicon chip using many different methods that may include suitable flow channels. The second hybrid external cavity laser 404 has a second oscillating frequency $f_2$ that depends on the RI of the input sample.

The first and second hybrid external cavity lasers 402 and 404 generate first and second light signals upon exposure to the input sample. The first and second light signals are combined on-chip producing a beat frequency on a high-speed photo-diode 406 in the gigahertz range. The combined signal may be analysed using a computing device such as data acquisition device, and balanced detection (not shown) may be implemented to reduce noise. The beat frequency $f_{beat}$ may have a value :

$$ f_{beat} = \frac{|f_2 - f_1|}{2} $$

In all embodiments, the change in the RI of the input sample changes the oscillating frequency $f_2$ according to:

$$\Delta f_2 = \frac{\Delta n}{n} f_2 \left[ \frac{1}{1 + \frac{FWHM}{FSR}} \right]$$

Where FWHM is the full width at half maximum of the resonance of the resonant mirror, FSR is the free spectral range between the modes of the laser cavity, f2 is the original oscillating frequency of the PhC laser 404, $\Delta n$ is the change in effective refractive index, and n is the effective refractive index.

Thus, the change in beat frequency is thus proportional to change in change in effective refractive index:

$$\Delta f_{beat} \propto \Delta n$$

The resolution of the measurement is given by the linewidth of the hybrid external cavity lasers. It would be apparent to one of ordinary skill in the art, that the linewidth of the hybrid external cavity lasers 402 and 404 is 4MHz, however, this is no way limiting.

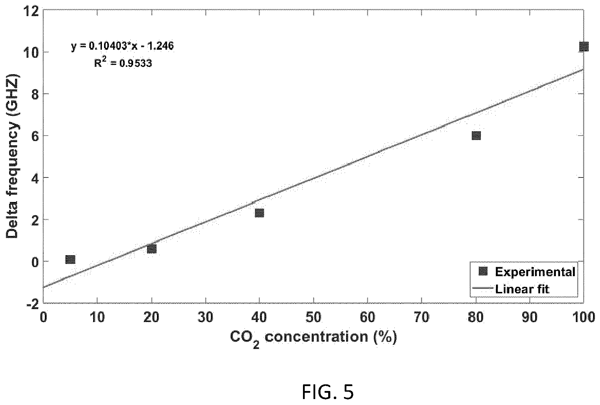

In an example, for a linewidth of 1MHz, a detection limit of $2.5 \times 10^{-9}$ RIU is estimated. FIG 5 illustrates an example measurement, in which the refractive index is varied through variations in a gas mixture of nitrogen and carbon dioxide, showing the beat frequency as a function of the cladding refractive index. In the case, the cladding is a gas comprising a controllable mixture of nitrogen and carbon dioxide. The gas refractive index is controlled by varying the composition of the gas from n=1.00029442 for pure nitrogen and n= 1.00043822 for pure carbon dioxide.

It is to be noted that the changes of RI can be generated, and therefore accurately measured by the heterodyne sensor, by either the concentration of the fluid interacting with the RI sensor, or its temperature, pressure and humidity, according to the relation:

$$\Delta n = \Delta n_{concentration} + TOC \cdot \Delta T + k\Delta p + \Delta n_{humidity}$$

Where TOC is the thermo-optic coefficient of the material on which the RI sensitive laser is based on, k is constant related to the fluid sensed and $\Delta p$ is the change in pressure of the fluid.

It is well known that the temperature induced spectral fluctuations limit the performance of RI sensors based on high Q-factor resonators, and considerable effort must be expended to stabilise the operating temperature. In this respect, the heterodyne measurement has an important advantage in that the beat frequency is a function of only the difference in output wavelengths of the RI sensing laser and reference laser. Fluctuations in the environmental conditions that affect both lasers thus have no effect on the measurement. This feature can be considered as a form of balanced detection, and a means to eliminate common mode noises.

In an embodiment of the present invention, two on-chip lasers with careful temperature and current control operate with a stable beat frequency. By integrating both lasers side by side, the lasers are exposed to very similar environments and temperatures and thus the effects of external temperature fluctuations. The RI sensor 400 may use a common low noise battery source that may drive both lasers. The effects of current variations may be almost completely cancelled out. At least an order of magnitude improvement in stability relative for free-running operation may be achieved. The ambient temperature fluctuations are a major problem for all refractometers, and therefore needs to be compensated.

The RI sensor 400 provides provide the means to measure changes in refractive index with extremely high precision. The RI sensor 400 may realise one of two potential demonstrators: a single gas sensor chip capable of detecting methane (or similar gas) at sub 10ppm levels in real-time; and a water quality sensor that can detect trihalomethanes, pesticides in water at sub ppm levels. The gas sensor may be a self-contained unit with a footprint of 5x5cm. The RI sensor 400 has a superior detection limit which may allow the detection of water contaminants in the parts per billion range, expanding the range of compounds that may be detected to include trihalomethanes, pesticides and others. Such compounds are virtually impossible to detect on-line in real-time with the current technology and a network of the refractive index sensors of the present invention may provide unprecedented surveillance of a water network. Also, the refractive index sensor is configured to detect a broad spectrum of gases at concentrations of 10ppm or better.

The RI sensor 400 may find applications in numerous market verticals such as Air Quality, Water Quality, Blood Diagnostics. The lower detection limit enables detection of other compounds allowing the potential detection of pesticides, one of the most challenging contaminants to detect, giving a competitive advantage. Laser stability may determine the detection limit in practice, which is estimated to be $\sim 1 \times 10^{-8}$ RIU in the worst case- representing a 100x improvement relative to silicon ring resonators.

The RI sensor may replace the RI transducer used in other systems, such that used in interferometric assisted photothermal spectroscopy which typically uses a Fabry-Perot (FP) interferometer as a sensitive transducer for detection of induced refractive index changes in the gas sample. The excitation laser beam is tuned to an absorption line of the target analyte and modulated. The periodic excitation of the analyte molecules inside the FP cavity through absorption of laser radiation leads to a periodic modulation of the gas temperature due to photothermal heating. A change of the gas temperature in turn causes a change of the refractive index. The periodic transmission function of the interferometer is shifted with respect to the vacuum wavelength when the refractive index of the sample in between the two mirrors alters. The ICAPS technique is relatively new, and can be applied to a very wide range of gases. High sensitivities have been achieved e.g. 5ppb levels for SO2 and 15ppb for CO. ICAPS is a generic technology as it can be used for many gases including methane, ethane and similar molecules. The use of RI sensor disclosed here potentially gives orders of magnitude improvements in sensitivity.

In the specification the terms "comprise, comprises, comprised and comprising" or any variation thereof and the terms include, includes, included and including" or any variation thereof are considered to be totally interchangeable, and they should all be afforded the widest possible interpretation and vice versa.

The invention is not limited to the embodiments hereinbefore described but may be varied in both construction and detail.

**Claims**

1.  A refractive index sensor, comprising:

    a reference laser and a RI sensitive laser wherein the reference and RI sensitive lasers have reference and sensing oscillating frequencies respectively,
    wherein the reference laser is configured to maintain the oscillating frequency at a constant value, upon exposure of the refractive index senor to an input sample,
    wherein the RI sensitive laser has the sensing oscillating frequency that varies based on a refractive index of the input sample, upon exposure to the input sample,
    wherein the reference laser and RI sensitive lasers generate reference and sensing signals; and
    a photodiode for receiving and combining the reference and sensing signals to generate a combined signal that has a beat frequency proportional to the refractive index of the input sample; and
    a computing unit for determining the refractive index of the input sample based on the beat frequency.

2.  The refractive index sensor as claimed in claim 1, wherein the RI sensitive laser includes a hybrid external cavity laser formed of a gain chip with a refractive index sensitive element that controls the operating wavelength of the RI sensitive laser.

3.  The refractive index sensor as claimed in claim 1, wherein the RI sensitive laser includes a hybrid external cavity laser formed of a one-dimensional photonic cavity and a gain chip, wherein the one-dimensional photonic cavity acts as a resonant mirror that sets the operating wavelength of the RI sensitive laser.

4.  The refractive index sensor as claimed in any preceding claim, wherein the reference laser includes a hybrid external cavity laser formed of a gain chip with a refractive index sensitive element that controls the operating wavelength of the RI sensitive laser, and in that the refractive index sensitive element has a thick silicon oxide cladding to ensure no changes to the reference oscillating frequency upon exposure to the input sample.

5.  The refractive index sensor as claimed in any preceding claim, wherein each of the RI sensitive and reference lasers have linewidth of order of MHz or less.

6.  The refractive index sensor as claimed in any preceding claim, wherein the one-dimensional photonic crystal cavity is silicon-nitride based.

7.  The refractive index sensor as claimed in any preceding claim, wherein each of the RI sensitive and reference lasers has lasing wavelengths, such that the difference in respective frequencies is less than the bandwidth of the photodiode.

8.  The refractive index sensor as claimed in any preceding claim, wherein the RI sensor is situated within a gas cell.

9.  The refractive index sensor as claimed in any preceding claim, wherein the photodiode is integrated either monolithically, using heterogeneous integration, hybrid integration or using flip chip bonding on the chip.

10. The refractive index sensor as claimed in any preceding claim, wherein the RI sensitive laser has the sensing oscillating frequency that varies based on a refractive index change generated by temperature, through thermo-optic mechanism, so that the RI sensor may be used for sensitive temperature measurements

11. The refractive index sensor as claimed in any preceding claim, wherein each of the RI sensitive and reference lasers are configured to be exposed to similar fluctuations in conditions external to the refractive index sensor.

12. The refractive index sensor as claimed in any preceding claim, wherein the RI sensitive laser includes a Distributed Feedback (DFB) laser, including phase-stabilized and self-injection-locked DFB and Fabry-Perot (FP) lasers.

13. The refractive index sensor as claimed in any preceding claim, wherein each of the RI sensitive and reference lasers have arbitrarily narrow linewidths down to the 1 Hz.

14. The refractive index sensor as claimed in claim 1, wherein the RI sensitive laser has the sensing oscillating frequency that varies based on at least one of: a refractive index change generated by temperature through thermo-optic mechanism, a refractive index change generated by pressure of the fluid interacting with the RI sensitive laser, a refractive index change generated by humidity of the fluid interacting with the RI sensitive laser, and a refractive index change generated by concentration of the fluid interacting with the RI sensitive laser.

15. A method of estimating a refractive index of an input sample, comprising:

providing a reference laser and a RI sensitive laser;
generating a reference signal by the reference laser upon exposure of the reference laser to the input sample, wherein the reference signal has a constant reference frequency; generating a sensing signal by the RI sensitive laser upon exposure of the RI sensitive laser to the input sample, wherein the sensing signal has a sensing oscillating frequency that varies based on a refractive index of the input sample;
combining the reference and sensing signals by a photodiode, to generate a combined signal that has a beat frequency proportional to the refractive index of the input sample; and
estimating the refractive index of the input sample based on the beat frequency.

Figure 1 Illustration of the origin of detection limit, which is proportional to the Full Width Half Maximum (FWHM) of the spectral feature

FIG.1

FIG.2

300

FIG. 3

3D view

Gain Chip

302

304

Resonant Mirror
~40μm long

FIG. 4

FIG. 5

Europäisches
Patentamt

European
Patent Office

Office européen
des brevets

# EUROPEAN SEARCH REPORT

**Application Number**

EP 24 17 4180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/104938 A1 (YISSUM RES DEV CO OF HEBREW UNIV JERUSALEM LTD [IL]) 14 June 2018 (2018-06-14) | 1,3,4,7, 9-11,14, 15 | INV. G01N21/41 |
| Y | * page 6, line 6 - line 15 * * page 9, line 28 - page 10, line 21 * * page 14, line 9 - line 13 * * page 16, line 5 - line 27 * * figures 1,2,4 * | 2-4,6 | |
| | ----- | | |
| X | CN 103 018 200 A (UNIV TSINGHUA) 3 April 2013 (2013-04-03) | 1-5,7,8, 14,15 | |
| Y | * abstract * * figures 1,2 * * Summary of the Invention * * Detailed Description * | 2-4,6 | |
| | ----- | | |
| X | WO 01/98756 A2 (UNIV CALIFORNIA [US]) 27 December 2001 (2001-12-27) | 1-5,7, 10,15 | |
| Y | * figures 1,2,5 * * paragraphs [0016] - [0019], [0022], [0025], [0031] * | 2-4,6 | TECHNICAL FIELDS SEARCHED (IPC) |
| | ----- | | |
| X | DANIEL A. COHEN ET AL.: "Biophotonic Integrated Circuits", PROCEEDINGS OF SPIE, vol. 5594, 2004, pages 81-93, XP040192764, | 1-4,7, 14,15 | G01N |
| Y | * abstract * * figures 1,4,11,12 * * page 81, last paragraph - page 84 * | 2-4,6 | |
| | ----- | | |
| | -/-- | | |

The present search report has been drawn up for all claims

| Place of search | Date of completion of the search | Examiner |
|---|---|---|
| Munich | 23 October 2024 | D'Alessandro, Davide |

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 17 4180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEREGOVSKI Y ET AL: "Design and characteristics of DBR-laser-based environmental sensors", SENSORS AND ACTUATORS B: CHEMICAL, ELSEVIER BV, NL, vol. 53, no. 1-2, 26 November 1998 (1998-11-26), pages 116-124, XP004151882, ISSN: 0925-4005, DOI: 10.1016/S0925-4005(98)00301-3 | 1-5,7,9, 11-15 | |
| Y | * abstract * <br> * figures 1,5 * <br> * page 117 - page 118 * <br> ----- | 2-4,6 | |
| X | WO 99/37996 A1 (TORSANA BIOSENSOR A S [DK]; LADING LARS [DK]; LINDVOLD LARS [DK]) 29 July 1999 (1999-07-29) | 1-4,7,9, 11,12, 14,15 | |
| Y | * figure 1 * <br> * page 20, line 10 - page 21, line 26 * <br> ----- | 2-4,6 | |
| Y | IADANZA SIMONE ET AL: "High-Q asymmetrically cladded silicon nitride 1D photonic crystals cavities and hybrid external cavity lasers for sensing in air and liquids", NANOPHOTONICS, vol. 11, no. 18, 10 August 2022 (2022-08-10), pages 4183-4196, XP093217387, ISSN: 2192-8614, DOI: 10.1515/nanoph-2022-0245 <br> * abstract * <br> * page 4192 - page 4193 * <br> * figures 10,11 * <br> ----- | 2-4,6 | TECHNICAL FIELDS SEARCHED (IPC) |

The present search report has been drawn up for all claims

| Place of search | Date of completion of the search | Examiner |
|---|---|---|
| Munich | 23 October 2024 | D'Alessandro, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

# ANNEX TO THE EUROPEAN SEARCH REPORT
## ON EUROPEAN PATENT APPLICATION NO.

EP 24 17 4180

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2024

| Patent document cited in search report | Publication date | Patent family member(s) | Publication date |
|---|---|---|---|
| WO 2018104938 A1 | 14-06-2018 | NONE | |
| CN 103018200 A | 03-04-2013 | NONE | |
| WO 0198756 A2 | 27-12-2001 | AU 7137301 A | 02-01-2002 |
| | | US 2002018504 A1 | 14-02-2002 |
| | | WO 0198756 A2 | 27-12-2001 |
| WO 9937996 A1 | 29-07-1999 | AT E220203 T1 | 15-07-2002 |
| | | AU 2829499 A | 09-08-1999 |
| | | DE 69902023 T2 | 27-02-2003 |
| | | DK 1066507 T3 | 28-10-2002 |
| | | EP 1066507 A1 | 10-01-2001 |
| | | JP 2002501190 A | 15-01-2002 |
| | | US 6493090 B1 | 10-12-2002 |
| | | WO 9937996 A1 | 29-07-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **I. M. WHITE ; X. FAN**. On the performance quantification of resonant refractive index sensors. *Optics Express*, 2008, vol. 16 (2), 1020-1028